# DEMANDE DE BREVET EUROPEEN

(11) **EP 1 967 430 A1**
(43) Date de publication de la demande: **10.09.2008**
(21) Numéro de dépôt: 08305044.3
(22) Date de dépôt: 04.03.2008
(51) Int. Cl.: B60W 10/02, B60K 6/36, B60K 6/387

(54) **Procédé de pilotage d'un changement de rapport dans un groupe motopropulseur de véhicule automobile**

(30) Priorité: 07.03.2007 FR 0753699
(71) Demandeur: PEUGEOT CITROËN AUTOMOBILES S.A., 78140 Vélizy Villacoublay (FR)
(72) Inventeur: Le Dren, Arnaud, 92400, COURBEVOIE (FR)

(57) **Abrégé**

L'invention concerne un procédé de pilotage d'un changement de rapport dans un groupe motopropulseur de véhicule automobile.

Selon ce procédé, l'organe de couplage est d'abord ouvert partiellement à un degré tel que son couple transmissible (Ct) correspond au couple à la roue (Cr) après changement de rapport, le commutateur de couple est ensuite pilotée pour désengager le rapport courant et engager le nouveau rapport, et l'organe de couplage est fermé après engagement du nouveau rapport.

L'invention s'applique notamment à une architecture de groupe motopropulseur comprenant un moteur thermique, une boîte de vitesses et un seul embrayage.

## Description

L'invention concerne un procédé de pilotage d'un changement de rapport dans un groupe motopropulseur de véhicule, notamment de véhicule automobile, c'est-à-dire un ensemble comprenant une source de couple, par exemple, un moteur thermique associé à un commutateur de couple instantané, par exemple une boîte de vitesses, par l'intermédiaire d'un organe de couplage par exemple du type embrayage sec ou humide.

L'invention s'applique à un groupe motopropulseur comprenant une boîte de vitesses pilotée, c'est-à-dire dans lequel les changements de rapport sont provoqués par un ensemble d'actionneurs pilotés par une unité de commande.

Selon un procédé connu, l'unité de commande pilote un changement de rapport en commandant les actionneurs pour d'abord ouvrir l'embrayage, désengager le rapport courant, engager le nouveau rapport, puis refermer l'embrayage.

Parallèlement, l'unité de commande pilote le moteur thermique du groupe motopropulseur pour éviter une montée en régime trop importante pendant que l'embrayage est ouvert.

Afin de réduire le temps de changement de rapport, il a été envisagé de changer de rapport sans ouvrir l'embrayage.

Ceci peut être effectué avec une boîte de vitesses équipée de crabots surdimensionnés pour supporter un crabotage sous vitesses différentielles.

Lors du changement de rapport, la vitesse de rotation de l'arbre primaire doit alors changer quasi-instantanément pour s'adapter à celle de l'arbre secondaire moyennant le nouveau rapport de démultiplication.

Comme d'une part, l'arbre primaire est entraîné, via l'embrayage, par le moteur thermique, et que d'autre part, l'arbre secondaire est entraîné par l'inertie de roulement du véhicule, la puissance du choc de crabotage est très élevée.

Ceci se traduit par une secousse ressentie dans le véhicule lors du changement de rapport, et par la nécessité d'un surdimensionnement très important des crabots pour que leur durée de vie reste satisfaisante.

Pour résoudre ce problème, il existe des boîtes de vitesses à double embrayage, c'est-à-dire dans lesquelles le passage d'un rapport à un autre est effectué graduellement en ouvrant l'embrayage correspondant au rapport courant, et en fermant l'embrayage correspondant au nouveau rapport.

Ces boîtes de vitesses à double embrayage offrent un meilleur ressenti au niveau des occupants du véhicule, puisqu'elles assurent un changement de rapport sous couple dans lequel l'évolution du couple à la roue est graduelle, voire nulle.

Cependant une boîte de vitesses à double embrayage comprend deux arbres primaires au lieu d'un, ainsi que deux embrayages au lieu d'un. Elle induit par conséquent un surcoût significatif du fait que son architecture générale est beaucoup plus complexe que celle des boîtes de vitesses classiques.

Le but de l'invention est de proposer un procédé de pilotage applicable notamment à une architecture de boîte de vitesses comportant un seul organe de couplage, et capable d'assurer un changement de rapport sous couple sans produire d'à-coups ou de secousses.

A cet effet, l'invention a pour objet un procédé de pilotage d'un changement de rapport sous couple, dans un groupe motopropulseur de véhicule, notamment de véhicule automobile, comportant une source de couple, un organe de couplage de la source de couple avec au moins une roue du véhicule, un commutateur de couple instantané disposé entre l'organe de couplage et la roue, une raideur de transmission et une inertie de véhicule, dans lequel l'organe de couplage est d'abord ouvert partiellement à un degré tel que son couple transmissible correspond au couple à la roue après changement de rapport, dans lequel le commutateur de couple est ensuite piloté pour désengager le rapport courant et engager le nouveau rapport, et dans lequel l'organe de couplage est fermé après engagement du nouveau rapport.

Avec ce procédé, l'embrayage est utilisé en limiteur de couple durant le changement de rapport, ce qui permet de réduire les efforts apparaissant dans la boîte de vitesses durant le changement de rapport, pour améliorer le ressenti au niveau des occupants du véhicule.

L'invention concerne également un procédé tel que défini ci-dessus, dans lequel avant fermeture de l'organe de couplage, la source de couple est pilotée pour atteindre un régime cible correspondant au régime du commutateur de couple après changement de rapport.

L'invention concerne également un procédé tel que défini ci-dessus, dans lequel avant fermeture de l'organe de couplage, la source de couple est pilotée pour délivrer un couple correspondant au couple à la roue après changement de rapport.

L'invention concerne également un procédé tel que défini ci-dessus, dans lequel l'organe de couplage est ouvert partiellement à un degré tel que son couple transmissible corresponde au couple à la roue avant changement de rapport, avant d'être ouvert partiellement à un degré tel que son couple transmissible corresponde au couple à la roue après changement de rapport.

L'invention concerne également un procédé tel que défini ci-dessus, dans lequel pendant que l'organe de couplage est ouvert à un degré tel que son couple transmissible corresponde au couple à la roue avant changement de rapport, la source de couple est pilotée pour atteindre un régime supérieur à un régime cible correspondant au régime du commutateur de couple après changement de rapport.

L'invention sera maintenant décrite plus en détail, et en référence aux figures annexées.

La figure 1 est un graphe montrant l'évolution des variables de la transmission que sont les régimes du moteur et de l'arbre primaire ainsi le couple moteur, le couple à la roue, le couple transmissible et le couple effectivement transmis par l'embrayage, dans le cas d'un changement de rapport montant en tirage avec réserve de couple conformément au procédé selon l'invention.

La figure 2 est un graphe montrant l'évolution des variables de la transmission dans le cas d'un changement de rapport montant en tirage sans réserve de couple conformément au procédé selon l'invention.

La figure 3 est un graphe montrant l'évolution des variables de la transmission dans le cas d'un changement de rapport descendant avec réserve de couple conformément au procédé selon l'invention.

La figure 4 est un graphe montrant l'évolution des variables de la transmission dans le cas d'un changement de rapport descendant sans réserve de couple conformément au procédé selon l'invention.

La figure 5 est un graphe montrant l'évolution des variables de la transmission dans un autre cas de changement de rapport descendant sous couple conformément au procédé selon l'invention.

D'une manière générale, le moteur thermique comprend un arbre moteur qui est lié à l'arbre primaire par l'embrayage, et l'arbre primaire applique à la boîte de vitesses un couple qu'elle transmet, démultiplié selon le rapport engagé, aux roues.

Lorsque l'embrayage est complètement fermé, le couple appliqué par l'arbre primaire à la boîte de vitesses est le couple délivré par le moteur.

Lorsque l'embrayage a un certain degré d'ouverture, il est capable de transmettre un couple dont l'amplitude dépend de ce degré d'ouverture.

Dans ce cas, si le couple moteur est inférieur au couple transmissible, il est transmis complètement par l'embrayage à l'arbre primaire, mais s'il est supérieur à ce couple transmissible, l'embrayage passe dans un état glissant, et seul le couple transmissible est transféré par le moteur à l'arbre primaire.

L'idée à la base de l'invention est d'utiliser l'embrayage comme limiteur de couple pendant que le nouveau rapport est engagé. A cet effet, l'embrayage est ouvert partiellement lorsque la boîte de vitesses est commandée pour changer de rapport.

Lors de l'engagement du nouveau rapport, la puissance du choc de crabotage est réduite puisque l'inertie en rotation du moteur thermique n'a pas à être absorbée par ce choc : au contraire, lors de l'engagement du nouveau rapport, l'embrayage se met à glisser jusqu'à ce que la vitesse du moteur atteigne celle de l'arbre primaire.

Avantageusement, l'embrayage est ouvert à un degré tel que sont couple transmissible corresponde au couple devant être délivré par le moteur après changement de rapport pour que le couple à la roue après changement de rapport soit identique au couple à la roue avant changement de rapport.

Le couple à transmettre après changement de rapport est le produit du couple délivré par le moteur sur l'arbre primaire avant changement de rapport, lorsque l'embrayage est fermé, par le ratio des rapports, c'est-à-dire le rapport de démultiplication du nouveau rapport divisé par le rapport de démultiplication du rapport courant.

Dans le cas d'un changement de rapport montant en tirage, le couple appliqué par l'arbre primaire à la boîte de vitesses après changement de rapport est supérieur à celui qu'il applique avant changement de rapport, pour que le couple à la roue soit identique avant et après le changement de rapport.

Dans le cas d'un changement de rapport descendant, le couple appliqué par l'arbre primaire après changement de rapport est inférieur à celui qu'il applique avant changement de rapport, pour que le couple à la roue soit identique avant et après changement de rapport.

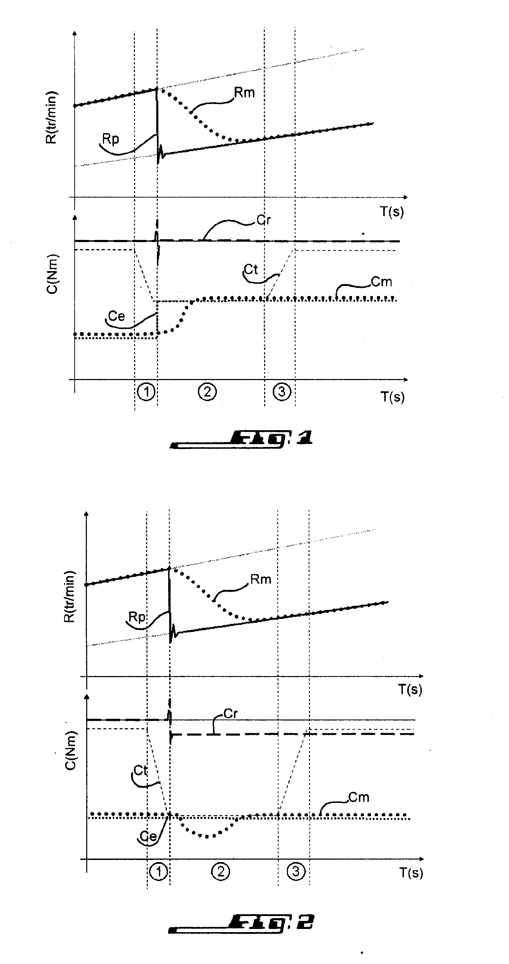

Les différentes phases du procédé selon l'invention apparaissent notamment sur le graphe de la figure 1, dans laquelle elles sont repérées par 1 à 3, ce graphe correspondant à un changement de rapport montant en tirage.

Pendant la première phase 1, l'embrayage part d'un état complètement fermé et est ouvert graduellement jusqu'à un degré tel que son couple transmissible Ct correspond au couple moteur Cm à transmettre après changement de rapport, pour que le couple à la roue Cr après changement de rapport soit identique au couple à la roue Cr avant changement de rapport.

Lorsque l'embrayage a atteint ce degré d'ouverture souhaité, la boîte de vitesses est commandée pour engager le nouveau rapport, cet engagement correspondant au passage de la phase 1 à la phase 2.

Lors de l'entrée en phase 2, l'embrayage se met instantanément à glisser pour jouer son rôle de limiteur de couple. Dans cette phase de glissement, le couple à la roue Cr qui est maintenu au même niveau est piloté par le couple transmissible Ct par l'embrayage.

Il est à noter que le moteur voit un échelon de couple Ct, pendant un faible intervalle de temps, lié à la mise en glissement de l'embrayage, ceci étant suivi par l'effondrement du régime du moteur.

Le moteur est ensuite piloté en régime pour garantir le glissement et synchroniser les régimes du moteur et de l'arbre primaire tangentiellement afin de repasser progressivement dans un état non glissant de l'embrayage.

Durant cette phase 2, le couple Cm effectivement fourni par le moteur passe d'une première valeur à une seconde valeur supérieure à la première.

Parallèlement à l'établissement du nouveau couple moteur, la diminution du régime Rp de l'arbre primaire, due au glissement de l'embrayage, se traduit par l'application d'un couple additionnel par l'arbre moteur sur l'arbre primaire.

En d'autres termes, l'arbre moteur est alors freiné par l'arbre primaire, via l'embrayage, et il applique par conséquent un couple additionnel à l'arbre primaire. Ce couple additionnel s'ajoute au couple Cm effectivement délivré par le moteur thermique.

Ce couple additionnel compense temporairement l'écart entre la première et la seconde valeur de couple Cm effectivement délivré par le moteur, de sorte que le couple à la roue Cr reste constant, y compris durant l'établissement du nouveau couple moteur.

Ainsi, le couple appliqué par l'arbre primaire à la boîte de vitesses, qui correspond au couple Ce qui est effectivement transmis par l'embrayage, passe quasi-instantanément de la première valeur de couple à la seconde valeur de couple lorsque l'embrayage passe dans un état glissant.

Il est à noter que le temps d'établissement du nouveau couple moteur peut être réduit avec une stratégie d'anticipation de demande de couple, c'est-à-dire une stratégie de réserve de couple.

Une telle stratégie consiste par exemple, avant changement de rapport, à modifier le pilotage du système d'injection en décalant l'avance à l'injection et en compensant ce décalage par une modification de la pression dans le rail d'injection de manière à conserver la première valeur de couple moteur. Après changement de rapport, l'avance à l'injection est recalée à une valeur nominale pour délivrer un couple moteur correspondant à la seconde valeur.

Après synchronisation du régime Rm du moteur avec le régime Rp de l'arbre primaire, l'embrayage est complètement refermé, ce qui correspond à la phase repérée par 3. A partir de là, le moteur est à nouveau piloté directement en couple.

Dans le cas d'un changement de rapport montant en tirage mais sans réserve de couple, l'évolution des variables de la transmission qui est légèrement différente est représentée en figure 2.

Cette situation correspond par exemple à celle dans laquelle le passage du dernier rapport est commandé, alors que le moteur ne pourra pas augmenter l'amplitude du couple qu'il délivre, ce qui va se traduire par une légère diminution du couple à la roue.

Dans ce cas, comme illustré sur la figure 2, après engagement du nouveau rapport, le couple Cm effectivement délivré par le moteur diminue temporairement, pendant qu'un couple additionnel Ct est fourni par effet d'inertie de l'arbre moteur lorsque l'embrayage est glissant, le temps que la vitesse de l'arbre moteur atteigne celle de l'arbre primaire.

On a ici également un échelon du couple Ct à la roue Cr lors de l'engagement du nouveau rapport. Mais cet échelon ne provoque pas d'oscillations du régime de la transmission du fait que l'embrayage est glissant dans la phase qui suit cet échelon.

Une fois que le régime de l'arbre moteur est identique à celui de l'arbre primaire, le couple moteur est ramené à sa valeur avant changement de rapport.

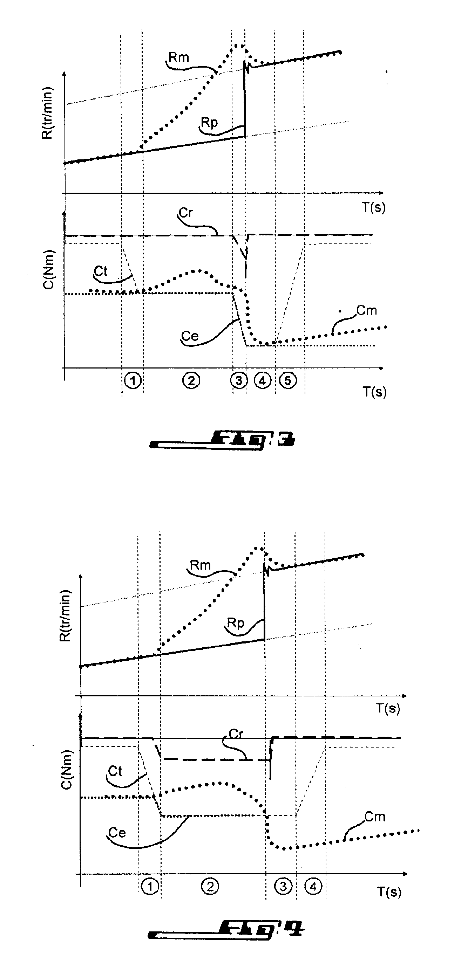

Dans le cas d'un changement de rapport descendant sous charge avec réserve de couple, le couple à délivrer par le moteur Cm passe d'une première valeur à une seconde valeur qui est inférieure à la première pour conserver le même couple à la roue, ce qui apparaît dans le graphe de la figure 3.

Dans une première phase, repérée par 1, l'embrayage est partiellement ouvert, à un degré tel que son couple transmissible Ct corresponde au couple à la roue Cr avant changement de rapport.

Le moteur est ensuite piloté en régime pour que son régime Rm dépasse le régime Rp de l'arbre primaire après changement de rapport, ce qui correspond à la phase repérée par 2. Ainsi, durant cette phase, le régime moteur Rm augmente, mais le couple Ce transmis à l'arbre primaire reste identique au couple transmis avant changement de rapport du fait que l'embrayage fonctionne alors en limiteur de couple, en étant dans un état glissant.

L'embrayage est alors ouvert à un degré supérieur qui correspond au couple moteur Cm après changement de rapport, cette ouverture supplémentaire correspondant à la phase 3. Pendant cette troisième phase, le régime moteur Rm continue d'augmenter.

Le changement de rapport est alors demandé à la boîte de vitesses qui engage le nouveau rapport à un instant correspondant à la fin de la phase 3 et au début de la phase 4.

Pendant la phase 4, le régime moteur est piloté pour atteindre tangentiellement le nouveau régime Rp de l'arbre primaire. L'embrayage est ensuite complètement fermé, et le pilotage moteur est à nouveau assuré directement par rapport au couple moteur Cm.

Dans le cas d'un changement de rapport sans réserve de couple, comme représenté sur le graphe de la figure 4, l'embrayage est directement ouvert jusqu'à un degré correspondant sensiblement au couple moteur après changement de rapport.

L'avantage d'une telle stratégie est de faciliter le travail du moteur en ne lui demandant pas de couple supplémentaire durant le changement de rapport, mais elle se traduit par une diminution du couple à la roue Cr durant le changement de rapport.

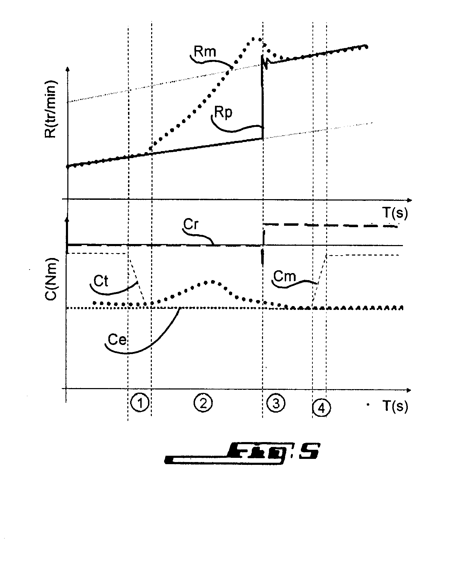

Dans le cas d'un changement de rapport descendant, il est également possible, comme représenté en figure 5, d'ouvrir l'embrayage à un degré tel que son couple transmissible Ct corresponde au couple moteur Cm avant changement de rapport, ce qui correspond à la phase 1.

Le moteur est ensuite piloté, en phase 2, pour que son régime Rp devienne supérieur au régime après changement de rapport ce qui provoque une légère augmentation du couple moteur Cm.

Le changement de rapport est ensuite provoqué à un instant correspondant à la fin de la phase 2 et au début de la phase 3, ce qui provoque une augmentation du couple à la roue Cr, du fait que le couple moteur Cm reste constant.

L'embrayage est ensuite complètement refermé en phase 5 pour piloter à nouveau le moteur thermique directement en couple.

Comme on le voit, le procédé selon l'invention permet de supprimer le saut de couple à la roue tout en utilisant une architecture de boîte de vitesses manuelle pilotée classique, c'est-à-dire équipée de synchroniseurs et d'un seul arbre primaire, ce qui permet d'améliorer ses performances sans augmentation de son coût de fabrication.

D'une manière générale, le procédé selon l'invention s'applique à une chaîne de transmission comprenant une source de couple, un organe de couplage, un commutateur de couple instantané, une raideur de transmission et une inertie de véhicule.

## Revendications

1. Procédé de pilotage d'un changement de rapport sous couple, dans un groupe motopropulseur de véhicule, notamment de véhicule automobile, comportant une source de couple, un organe de couplage de la source de couple avec au moins une roue du véhicule, un commutateur de couple instantané disposé entre l'organe de couplage et la roue, une raideur de transmission et une inertie de véhicule, dans lequel l'organe de couplage est d'abord ouvert partiellement à un degré tel que son couple transmissible (Ct) correspond au couple à la roue (Cr) après changement de rapport, dans lequel le commutateur de couple est ensuite piloté pour désengager le rapport courant et engager le nouveau rapport, et dans lequel l'organe de couplage est fermé après engagement du nouveau rapport.

2. Procédé selon la revendication 1, dans lequel avant fermeture de l'organe de couplage, la source de couple est pilotée pour atteindre un régime cible (Rp) correspondant au régime du commutateur de couple après changement de rapport.

3. Procédé selon la revendication 1 ou 2, dans lequel avant fermeture de l'organe de couplage, la source de couple est pilotée pour délivrer un couple (Cm) correspondant au couple à la roue (Cr) après changement de rapport.

4. Procédé selon l'une des revendications 1 à 3, dans lequel l'organe de couplage est ouvert partiellement à un degré tel que son couple transmissible (Ct) corresponde au couple à la roue (Cr) avant changement de rapport, avant d'être ouvert partiellement à un degré tel que son couple transmissible (Ct) corresponde au couple à la roue (Cr) après changement de rapport.

5. Procédé selon la revendication 4, dans lequel pendant que l'organe de couplage est ouvert à un degré tel que son couple transmissible (Ct) corresponde au couple à la roue (Cr) avant changement de rapport, la source de couple est pilotée pour atteindre un régime supérieur à un régime cible correspondant au régime du commutateur de couple après changement de rapport.
